# EUROPEAN PATENT APPLICATION

(11) **EP 1 586 547 A1**
(43) Date of publication of application: **19.10.2005**
(21) Application number: 03786306.5
(22) Date of filing: 25.12.2003
(51) Int. Cl.: C04B 41/87, B01D 39/20, B01D 46/00, B01J 32/00, B01J 35/04, C09D 1/00

(54) **COATING MATERIAL, CERAMIC HONEYCOMB STRUCTURE AND METHOD FOR PRODUCTION THEREOF**

(30) Priority: 09.01.2003 JP 2003002775; 18.12.2003 JP 2003421079
(71) Applicant: NGK INSULATORS, LTD., Nagoya-shi, Aichi 467-8530 (JP)
(72) Inventor: HIRAI, Sadaaki, NGK INSULATORS, LTD., Nagoya-shi, Aichi 467-8530 (JP); SHIROKI, Yoshihiro, c/o ITM Co. Ltd, Katori-gun, Chiba 289-0212 (JP); FUJII, Mikiya, c/o ITM Co. Ltd., Katori-gun, Chiba 289-0212 (JP)
(74) Representative: Paget, Hugh Charles Edward
(86) International application number: PCT/JP2003/016714
(87) International publication number: WO 2004/063125

(57) **Abstract**

A coating material of the present invention is a coating material comprising: cordierite powder as a main component having a tap bulk density of 1.3 g/cm³ or more; and water. The coating material is capable of forming a coated wall (outer wall), for example, on the surface of a porous body formed of a ceramic in such a manner that defects such as generation of cracks, and peeling, and a manufacturing yield is satisfactory are not easily generated.

## Description

### Technical Field

The present invention relates to a coating material, a ceramic honeycomb structure, and a method for production of the ceramic honeycomb structure, particularly to a coating material capable of effectively inhibiting generation of cracks in a coating wall (outer wall) formed on the surface of a porous body or the like, or peeling of the outer wall, a ceramic honeycomb structure in which generation of cracks in an outer wall or peeling of the outer wall is effectively inhibited, and a production method of the structure.

### Background Art

A honeycomb structure (ceramic honeycomb structure) formed of a ceramic has heretofore been used as a catalyst carrier for carrying a catalyst which purifies nitrogen oxide (NOₓ), carbon monoxide (CO), hydrocarbon (HC) or the like in an automobile exhaust gas, or as a filter for trapping particulates in an exhaust gas, particularly diesel particulates.

This honeycomb structure comprises a honeycomb-shaped cell structure constituted of a porous body having a plurality of cells functioning as fluid channels. The insides (partition walls which partition cells) of a plurality of cells constituting this cell structure are impregnated with a catalyst liquid, dried, and baked so that a catalyst can be loaded, and the structure is usable as a catalyst body.

In recent years, exhaust gas regulations have to be handled which have been strengthened year by year, and from requirements for low fuel consumption and high output, there have been demand for reducing of pressure losses of the catalyst carrier and filter, and enhancement of an exhaust gas purification efficiency. To meet the demands, the partition walls which partition the cells are thinned to reduce the pressure losses, and the catalyst needs to be activated in an early stage after starting of an engine to enhance a purification performance.

On the other hand, there is a large demand for a large ceramic honeycomb structure which is to be mounted on a large vehicle having a large displacement, such as a truck and a bus. Therefore, a large ceramic honeycomb structure having thin walls and high porosity have been required to be easily manufactured and provided with a satisfactory yield from an industrial world.

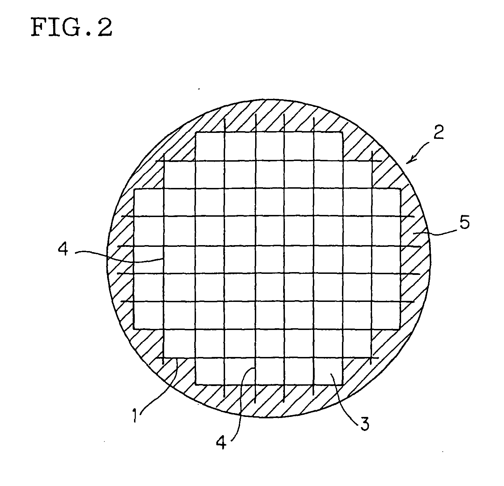

The ceramic honeycomb structure having this structural characteristic has a problem that a mechanical strength is low, because the partition walls are thin and the porosity is high. Here, reinforcing means is disposed in the large ceramic honeycomb structure in order to enhance the mechanical strength and inhibit deformation, breakage or the like at a use time. There has been proposed a method of enhancing the mechanical strength of the ceramic honeycomb structure, in which, for example, as shown in FIG. 2, an outer wall 5 is disposed in an outer periphery of a cell structure 1 having a honeycomb structure, or a reinforced layer (coated layer) comprising a predetermined reinforcing material or the like is disposed (see, e.g., Japanese Patent Publication No. 51-44713, Japanese Utility Model Application Laid-Open Nos. 50-48858, 53-133860, 63-144836, Japanese Patent No. 2613729).

However, according to the above-described method, for example, cracks are generated in the outer wall disposed in the outer periphery of the cell structure, or the outer wall itself peels in some case, and there is a problem that the mechanical strength of the ceramic honeycomb structure drops. Furthermore, to load the catalyst on the partition walls of the ceramic honeycomb structure whose outer wall has been cracked in this manner, there is also a problem that the catalyst liquid leaks from the cracks in a step of loading the catalyst. Even when the outer periphery of the cell structure is coated with a coating material, there is a case where a coating ability is not necessarily satisfactory, for example, wettability of the applied coating material is unsatisfactory, or the material easily peels. There is a problem that a manufacturing yield is small.

The present invention has been developed in view of the problems of conventional techniques, and aims at providing: a coating material capable of forming a coated wall (outer wall), for example, on the surface of a porous body formed of a ceramic in such a manner that defects are not easily generated such as generation of cracks, and peeling, and a manufacturing yield is satisfactory; a ceramic honeycomb structure in which defects are not easily generated such as generation of cracks in an outer wall and peeling of the outer wall; and a method for production of a ceramic honeycomb structure with a satisfactory yield, in which defects are not easily generated such as generation of cracks in an outer wall and peeling of the outer wall.

### Disclosure of the Invention

That is, according to the present invention, there are provided the following coating material, ceramic honeycomb structure, and method for production of the ceramic honeycomb structure.
[1] A coating material (hereinafter referred to as "first coating material" in some cases) comprising:
   cordierite powder as a main component having a tap bulk density of 1.3 g/cm³ or more; and water.
[2] The coating material according to the above [1], wherein an average particle diameter of the cordierite powder is in a range of 20 to 55 µm, and a content of a powder component having a particle diameter of 44 µm or less in the cordierite powder is 80 mass% or less with respect to the whole cordierite powder.
[3] The coating material according to the above [2], wherein the average particle diameter of the cordierite powder is in a range of 25 to 55 µm.
[4] A coating material (hereinafter referred to as "second coating material" in some cases) comprising:
   ceramic powder as a main component; and
   water,
   wherein an average particle diameter of the ceramic powder is in a range of 20 to 55 µm, and a content of a powder component having a particle diameter of 44 µm or less in the ceramic powder is 80 mass% or less with respect to the whole ceramic powder.
[5] The coating material according to the above [4], wherein the average particle diameter of the ceramic powder is in a range of 25 to 55 µm.
[6] The coating material according to any one of the above [1] to [5], further comprising: at least one selected from the group consisting of ceramic fiber, silica sol, and alumina sol.
[7] The coating material according to any one of the above [1] to [6], for use in coating a surface of a porous body formed of a ceramic and having a predetermined shape and thereafter drying and/or firing the material to thereby form an outer wall on the surface of the porous body.
[8] A ceramic honeycomb structure comprising:
   a cell structure constituted of a porous body having a plurality of cells, each cell being surrounded by partition walls and functioning as a fluid channel; and
   an outer wall disposed in such a manner as to coat an outer peripheral portion of the cell structure and constituted of a porous body formed of a material containing ceramic powder as a main component,
   wherein a surface roughness Ra of the outer wall is in a range of 5 to 50 µm.
[9] The ceramic honeycomb structure according to the above [8], wherein the ceramic powder forming the outer wall is cordierite powder having a tap bulk density of 1.3 g/cm³ or more.
[10] The ceramic honeycomb structure according to the above [8] or [9], wherein an average particle diameter of the ceramic powder forming the outer wall is in a range of 20 to 55 µm, and a content of a powder component having a particle diameter of 44 µm or less in the ceramic powder is 80 mass% or less with respect to the whole ceramic powder.
[11] A method (hereinafter referred to as "the first method for producing a ceramic honeycomb structure " in some cases) for producing a ceramic honeycomb structure, comprising the steps of:
   applying a coating material containing cordierite powder as a main component and water in such a manner as to coat an outer periphery of a cell structure constituted of a porous body having a plurality of cells, each cell being surrounded by partition walls and functioning as a fluid channel; and
   drying and/or firing the applied coating material to thereby form an outer wall,
   wherein a tap bulk density of the cordierite powder is 1.3 g/cm³ or more.
[12] The method for producing the ceramic honeycomb structure according to the above [11], wherein an average particle diameter of the cordierite powder is in a range of 20 to 55 µm, and a content of a powder component having a particle diameter of 44 µm or less in the cordierite powder is 80 mass% or less with respect to the whole cordierite powder.
[13] The method for producing the ceramic honeycomb structure according to the above [12], wherein the average particle diameter of the cordierite powder is in a range of 25 to 55 µm.
[14] A method (hereinafter referred to as "the second method for producing a ceramic honeycomb structure " in some cases) for producing a ceramic honeycomb structure, comprising the steps of:
   applying a coating material containing ceramic powder as a main component and water in such a manner as to coat an outer periphery of a cell structure constituted of a porous body having a plurality of cells, each cell being surrounded by partition walls and functioning as a fluid channel; and
   drying and/or firing the applied coating material to thereby form an outer wall,
   wherein an average particle diameter of the ceramic powder is in a range of 20 to 55 µm, and a content of a powder component having a particle diameter of 44 µm or less in the ceramic powder is 80 mass% or less with respect to the whole ceramic powder.
[15] The method for producing the ceramic honeycomb structure according to the above [14], wherein the average particle diameter of the cordierite powder is in a range of 25 to 55 µm.
[16] The method for producing the ceramic honeycomb structure according to any one of the above [11] to [15], wherein the coating material further comprises: at least one selected from the group consisting of ceramic fiber, silica sol, and alumina sol.

### Brief Description of the Drawings

FIG. 1 is a sectional view of a cell structure cut by a plane which is vertical to a central axis of the structure;
FIG. 2 is a sectional view of a ceramic honeycomb structure cut by a plane which is vertical to a central axis of the structure; and
FIG. 3 is a schematic sectional view of a cell structure having a structure in which a plurality of cells are alternately plugged by plugging portions.

### Best Mode for Carrying out the Invention

A best mode for carrying out the present invention will be described hereinafter, but it should be understood that the present invention is not limited to the following embodiment, and design change, modification and the like are appropriately added based on usual knowledge of a person skilled in the art without departing from the scope of the present invention. It is to be noted that in the present description, when "the coating material of the present invention" is simply mentioned, either of first and second coating materials is indicated. When "the method for producing the ceramic honeycomb structure of the present invention" is simply mentioned, either of the first and the second production methods of the ceramic honeycomb structure is indicated.

The present inventors have found out that, for example, a porous body formed of a ceramic easily rapidly takes away moisture contained in a coating material applied on the surface of the body, and a moisture content difference is easily generated in each portion in a layer (coating layer, coated layer) formed by the applied coating material. That is, it has been found that due to this, (1) a difference is made in shrinkage in each portion in the coating layer to generate cracks or the like easily in an outer wall, and (2) viscosity of the coating material rapidly rises, and a coating ability drops. A characteristic of ceramic powder (cordierite powder) is defined which is contained as a main component in the coating material to suppress rapid movement of the moisture into the porous body, and accordingly the present invention has been completed.

The first coating material of the present invention contains: cordierite powder as a main component having a tap bulk density of 1.3 g/cm³ or more; and water. As to the first coating material, which is an embodiment of the present invention, containing: cordierite powder having a tap bulk density of not less than the value mentioned above and constituting a main component; and water, when the coating material is applied in such a manner as to coat, for example, an outer peripheral surface or the like of the porous body formed of a ceramic, the coating material is brought into contact with the porous body, and accordingly the coating layer is first formed. Immediately after the coating layer is formed, a part of the moisture contained in this coating layer is absorbed by the porous body. Accordingly, a thin dense layer is formed in the very vicinity of the surface of the porous body in contact with the coating layer, the thin dense layer being formed of a fine component (fine particle) and a coarse component (coarse particle) in the cordierite powder contained in the coating layer. Since the formed dense layer suppresses further absorption of the moisture into the porous body, rapid moisture movement is suppressed in the coating layer formed by the coating material, and a moisture content difference is not easily generated in each portion in the coating layer formed by the applied coating material. As a result, effects are produced that a difference in shrinkage is not easily generated in each portion in the coating layer in the subsequent drying step, and defects such as generation of cracks in the formed outer wall and peeling of the outer wall are not easily generated.

Moreover, since the formed dense layer suppresses the absorption of the moisture by the porous body, deterioration of a coating ability accompanying a rapid rise of viscosity of the coating material is inhibited. Therefore, by the use of the first coating material of the present invention, the coating material can be applied while keeping a satisfactory coating ability. Therefore, the outer wall which does not have any defect can be satisfactorily formed with a high yield.

As to the cordierite powder contained as the main component in the first coating material, when the tap bulk density is less than 1.3 g/cm³, defects such as generation of cracks in the formed outer wall and peeling of the outer wall are unfavorably easily generated. From a viewpoint of inhibiting generation of defects such as generation of cracks in the outer wall and peeling of the outer wall more effectively, and forming the outer wall satisfactorily with higher yield, the tap bulk density of the cordierite powder is preferably 1.34 g/cm³ or more, further preferably 1.39 g/cm³ or more.

In the first coating material of the present invention, there is not any special limitation as to an upper limit value of the tap bulk density of the cordierite powder, but the value is preferably 1.50 g/cm³ or less in consideration of a substantial handling property or the like. In the present description when "the cordierite powder as a main component" is referred to, "the main component" means that a composition ratio of the cordierite powder is highest among components contained in the coating material. Specifically, the ratio is 50 mass% or more, preferably 60 mass% or more, further preferably 65 mass% or more. It is to be noted that the first coating material of the present invention essentially preferably comprises the cordierite powder as a main component having the predetermined tap bulk density, and water from viewpoints of effect, ease of preparation, cost and the like.

Moreover, in the first coating material, preferably the average particle diameter of the cordierite powder contained in the coating material is in a range of 20 to 55 µm, and a content (hereinafter referred to simply as "44 µm or less powder component content A") of the powder component having a particle diameter of 44 µm or less in the cordierite powder is 80 mass% or less with respect to the whole cordierite powder. Further preferably, the average particle diameter is in a range of 25 to 55 µm, and the 44 µm or less powder component content A is 80 mass% or less. Especially preferably, the average particle diameter is in a range of 30 to 50 µm, and the 44 µm or less powder component content A is 78 mass% or less. When defining the average particle diameter and the 44 µm or less powder component content A of the cordierite powder together with the tap bulk density, effects are produced that the absorption of the moisture into the porous body is further effectively inhibited, the difference in shrinkage is not easily made in each portion in the coating layer in the subsequent drying step, and the defects such as generation of cracks in the outer wall and peeling of the outer wall are not easily . Especially, when the average particle diameter of the cordierite powder is in a range of 25 to 55 µm, it is possible to form the outer wall in which defects such as cracks are not easily generated, for example, even in a case where the layer is rapidly dried under a heating situation at 80°C or more. This is also preferable from a viewpoint of enhancement of productivity.

When the average particle diameter of the cordierite powder is less than 20 µm, the viscosity of the coating material increases to deteriorate a coating ability, and a moisture amount unfavorably needs to be increased in order to lower the viscosity of the coating material. When the diameter exceeds 55 µm, the coating material might not go into a slurry or paste state, fluidity and wettability might deteriorate, and the coating ability unfavorably sometimes deteriorates. When the 44 µm or less powder component content A exceeds 80 mass%, the defects such as generation of cracks in the outer wall and peeling of the outer wall are unfavorably easily generated. It is to be noted that there is not any special limitation as to a lower limit value of the 44 µm or less powder component content A, but the value is preferably 50 mass% or more considering that the dense layer of the cordierite powder is formed on the surface of the porous body coated with the coating material.

Next, the second coating material of the present invention will be described. The second coating material of the present invention contains: ceramic powder as a main component in which an average particle diameter is 20 to 55 µm and a content (hereinafter referred to simply as "the 44 µm or less powder component content B") of a powder component having a particle diameter of 44 µm or less in the ceramic powder is 80 mass% or less with respect to the whole powder; and water.

When the second coating material containing: the ceramic powder as the main component in which an average particle diameter is 20 to 55 µm and the 44 µm or less powder component content B is 80 mass% or less ; and water, is applied in such a manner as to coat, for example, the outer peripheral surface or the like of the porous body formed of a ceramic, the coating material is brought into contact with the porous body, and accordingly a coating layer is first formed. Immediately after the coating layer is formed, a part of the moisture contained in this coating layer is absorbed by the porous body. Accordingly, a thin dense layer is formed in the very vicinity of the surface of the porous body in contact with the coating layer, the thin dense layer being formed of a fine component (fine particle) and a coarse component (coarse particle) in the ceramic powder contained in the coating layer. Since the formed dense layer suppresses further absorption of the moisture into the porous body, rapid moisture movement is suppressed in the coating layer formed by the coating material, and a moisture content difference is not easily generated in each portion in the coating layer formed by the applied coating material. As a result, effects are produced that a difference in shrinkage is not easily generated in each portion in the coating layer in the subsequent drying step, and defects such as generation of cracks in the outer wall and peeling of the outer wall are not easily generated.

Moreover, since the formed dense layer suppresses the absorption of the moisture by the porous body, deterioration of a coating ability accompanying a rapid rise of viscosity of the coating material is inhibited. Therefore, the coating material can be applied while keeping a satisfactory coating ability. Therefore, the outer wall which does not have any defect can be satisfactorily formed with a high yield.

As to the ceramic powder contained as the main component, when the average particle diameter is less than 20 µm, the viscosity of the coating material increases to deteriorate the coating ability, and the moisture amount unfavorably needs to be increased in order to lower the viscosity of the coating material. When the diameter exceeds 55 µm, the coating material might not go into a slurry or paste state, the fluidity and wettability might deteriorate, and the coating ability unfavorably sometimes deteriorates. When the 44 µm or less powder component content B exceeds 80 mass%, the defects such as generation of cracks in the outer wall and peeling of the outer wall are unfavorably easily generated. It is to be noted that in the present embodiment there is not any special limitation as to a lower limit value of the 44 µm or less powder component content B, but the value is preferably 50 mass% or more considering that the dense layer of the ceramic powder is formed on the surface of the porous body coated with the coating material. It is to be noted that, in the present description, when "the ceramic (or cordierite) powder as a main component" is referred to, "the main component" means that a composition ratio of the ceramic (or cordierite) powder is highest among components contained in the coating material. Specifically, the ratio is 50 mass% or more, preferably 60 mass% or more, further preferably 65 mass% or more. It is to be noted that the second coating material of the present invention essentially preferably comprises the ceramic powder as a main component having a predetermined average particle diameter and a predetermined 44 µm or less powder component content B, and water from the viewpoints of effect, ease of preparation, cost and the like.

From the viewpoints of inhibiting generation of the defects such as generation of cracks in the outer wall and peeling of the outer wall and further forming the outer wall with a satisfactory yield, preferably the average particle diameter of the ceramic powder is in a range of 25 to 55 µm, and the 44 µm or less powder component content B is 80 mass% or less. Further preferably, the average particle diameter is in a range of 30 to 50 µm, and the 44 µm or less powder component content B is 78 mass% or less. Especially when the average particle diameter of the ceramic powder is in a range of 25 to 55 µm, it is possible to form the outer wall in which defects such as cracks are not easily generated, for example, even in a case where the layer is rapidly dried under a heating situation at 80°C or more. This is also preferable from a viewpoint of enhancement of productivity.

Furthermore, examples of the ceramic powder contained in the second coating material of the present invention include powder formed of ceramics such as cordierite, silicon carbide, silicon nitride, alumina, mullite, zirconia, zirconium phosphate, aluminum titanate, and titania, or powder of combination of two or more of them. When the powder is appropriately selected in accordance with a material (type of the ceramic) of the porous body coated with the coating material, affinity can be enhanced between the porous body and the coating material.

The coating material of the present invention preferably further contains at least one selected from the group consisting of ceramic fiber, silica sol, and alumina sol. When the material contains ceramic fiber, for example, the outer wall formed on the surface of the porous body formed of the ceramic can be highly strengthened,. Even when the applied coating material is dried at a high temperature, generation of cracks or the like can be preferably more effectively inhibited. When the material contains colloidal oxide such as silica sol and alumina sol, the colloidal oxide can combine with the ceramic powder (or the cordierite powder) by drying/dehydrating to form a strong outer wall with superior in heat resistance or the like. Especially, silica sol or alumina sol irreversibly combines with the powder when dried at 150°C or more, the outer wall can be superior in chemical durability. It is to be noted that preferable examples of the ceramic fiber include fiber formed of aluminosilicate, silicon carbide or the like.

In a case where the outer peripheral surface of the porous body is coated, the coating material of the present invention produces effects that the difference in shrinkage is not easily generated in each portion in the formed coating layer and the defects such as generation of cracks in the outer wall and peeling of the outer wall are not easily generated. Therefore, utilizing the characteristic of producing these effects, the material is preferably used in coating the surface of the porous body formed of the ceramic and having a predetermined shape, and thereafter drying and/or firing the body to thereby form the outer wall on the surface of the porous body.

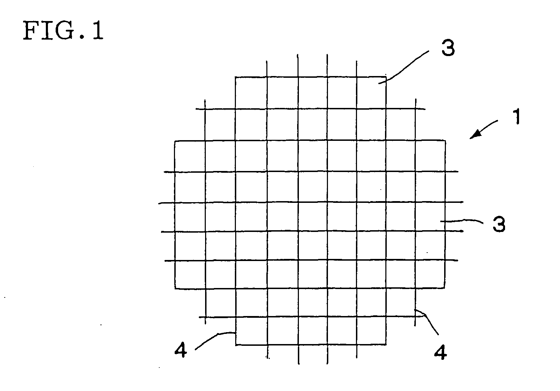

There is not any special limitation as to the type of the ceramic constituting the porous body coated with the coating material of the present invention, and examples of the ceramic include cordierite, silicon carbide, silicon nitride, alumina, mullite, zirconia, zirconium phosphate, aluminum titanate, and titania. Furthermore, there is not any special limitation as to a shape of the porous body. For example, as shown in FIG. 1, a cell structure 1 can be mentioned. The cell structure 1 is constituted of a porous body having a large number of pores, and formed into a honeycomb shape having a plurality of cells 3. Each cell 3 is surrounded by very thin partition walls 4 and functioning as a fluid channel.

FIG. 2 is a sectional view of a ceramic honeycomb structure cut by a plane which is vertical to a central axis of the structure. That is, the coating material of the present invention is applied in such a manner as to coat the outer periphery of the cell structure 1 shown in FIG. 1, and the structure is dried and/or fired. Accordingly, as shown in FIG. 2, an outer wall 5 can be formed in such a manner as to coat the outer periphery of the cell structure 1, and defects such as cracking and peeling are not easily generated.

Next, a ceramic honeycomb structure of the present invention will be described. The ceramic honeycomb structure of the present invention is a ceramic honeycomb structure comprising: a cell structure constituted of a porous body having a plurality of cells, each cell being surrounded by partition walls and functioning as a fluid channel; and an outer wall disposed in such a manner as to coat an outer peripheral portion of the cell structure and constituted of a porous body formed of a material containing ceramic powder as a main component. A surface roughness Ra of the outer wall is in a range of 5 to 50 µm. That is, the ceramic honeycomb structure of the present invention can be obtained by the first method for producing a ceramic honeycomb structure or the second method for producing a ceramic honeycomb structure according to the present invention described later, and the surface roughness Ra of the outer wall formed in this case is in a predetermined range. Therefore, the ceramic honeycomb structure of the present invention produces an effect that defects such as generation of cracks in the outer wall and peeling of the outer wall are not easily generated. It is to be noted that in the present description "the ceramic powder as a main component" indicates that a ratio of a material formed of the ceramic powder contained in the outer wall is 50 mass% or more, preferably 60 mass% or more, further preferably 65 mass% or more. In the present description, "the surface roughness Ra" indicates an arithmetic average roughness by JIS B0601 "surface roughness-definition and display".

As shown in FIG. 1, a cell structure 1, which is a constituent of the ceramic honeycomb structure, comprises a porous body having a large number of pores, and is formed into a honeycomb shape having a plurality of cells 3, each cell being surrounded by very thin partition walls 4 and functioning as a fluid . There is not any special limitation as to a material of the cell structure, but the cell structure needs to be a porous body having a large number of pores, and therefore a sintered body formed of a ceramic is used such as cordierite, silicon carbide, silicon nitride, alumina, mullite, zirconia, zirconium phosphate, aluminum titanate, and titania. Especially a sintered body formed of cordierite is preferably used. The sintered body formed of cordierite has a small coefficient of thermal expansion, and is preferably superior in thermal shock resistance and mechanical strength.

Moreover, as shown in FIG. 2, a ceramic honeycomb structure 2 comprises: a cell structure 1; and an outer wall 5 formed in such a manner as to coat the outer periphery of this cell structure 1. In the ceramic honeycomb structure 2 according to the embodiment of the present invention, from a viewpoint of inhibiting defects such as generation of cracks in the outer wall 5 or generation of peeling, the surface roughness Ra of the outer wall 5 is in a range of preferably 5 to 45 µm, further preferably 8 to 40 µm.

Furthermore, in the ceramic honeycomb structure of the present invention, ceramic powder forming the outer wall of the structure is preferably cordierite powder having a tap bulk density of 1.3 g/cm³ or more because it is possible to further effectively inhibit generation of defects such as generation of cracks in the outer wall or generation of peeling. The tap bulk density is further preferably 1.34 g/cm³ or more, especially preferably 1.39 g/cm³ or more. It is to be noted that, in the ceramic honeycomb structure of the present invention, there is not any special limitation as to the upper limit value of the tap bulk density of the cordierite powder forming the outer wall, but the value is preferably 1.50 g/cm³ or less in consideration of a substantial handling property or the like.

Additionally, in the ceramic honeycomb structure of the present invention, as to the ceramic powder forming the outer wall, it is preferable that the average particle diameter be in a range of 20 to 55 µm, and a content (44 µm or less powder component content B) of a powder component having a particle diameter of 44 µm or less in the ceramic powder be 80 mass% or less with respect to the whole ceramic powder, because generation of defects such as generation of cracks in the outer wall or generation of peeling can be further effectively inhibited. It is further preferable that the average particle diameter be in a range of 25 to 55 µm, and the 44 µm or less powder component content B be 80 mass% or less. It is especially preferable that the average particle diameter be in a range of 30 to 50 µm, and the 44 µm or less powder component content B be 78 mass% or less. It is to be noted that there is not any special limitation as to the lower limit value of the 44 µm or less powder component content B, but the value is preferably 50 mass% or more.

It is to be noted that, in the ceramic honeycomb structure of the present invention, examples of the ceramic powder forming the outer wall include powder of cordierite, silicon carbide, silicon nitride, alumina, mullite, zirconia, zirconium phosphate, aluminum titanate, and titania, or powder of combination of two or more of them. When the powder is appropriately selected in accordance with the material of the cell structure coated with the coating material, affinity of the coating material can be enhanced. Especially, the powder (cordierite powder) formed of cordierite has a small coefficient of thermal expansion, and preferably the outer wall can be superior in thermal shock resistance and mechanical strength.

Next, the first method for producing a ceramic honeycomb structure (hereinafter referred to simply as "the first production method" in some cases) will be described according to the present invention. In the first method for producing a ceramic honeycomb structure of the present invention, a coating material containing cordierite powder as a main component, and water is applied in such a manner as to coat an outer periphery of a cell structure constituted of a porous body having a plurality of cells, each cell being surrounded by partition walls and functioning as a fluid channel. The applied coating material is dried and/or fired to thereby form an outer wall. In the method for producing the ceramic honeycomb structure, a tap bulk density of the cordierite powder is 1.3 g/cm³ or more. Details will be described hereinafter.

As shown in FIG. 1, a cell structure 1, which is usable in the first production method of the present invention, comprises a porous body having a large number of pores and being formed into a honeycomb shape having a plurality of cells 3, each cell 3 being surrounded by very thin partition walls 4 and functioning as a fluid channel. There is not any special limitation as to a material, but the structure needs to be a porous body having a large number of pores, and therefore a sintered body formed of a ceramic is usually used such as cordierite, silicon carbide, silicon nitride, alumina, mullite, zirconia, zirconium phosphate, aluminum titanate, and titania. Especially a sintered body formed of cordierite is preferably used. The sintered body formed of cordierite has a small coefficient of thermal expansion, and is preferably superior in thermal shock resistance and mechanical strength. It is to be noted that the method for producing the cell structure 1 will be described later.

As shown in FIG. 2, a ceramic honeycomb structure 2 comprises: the cell structure 1; and an outer wall 5 formed in such a manner as to coat the outer periphery of the cell structure 1. In one embodiment of the first production method of the present invention, a coating material containing the cordierite powder as a main component, and water is applied in such a manner as to coat a outer periphery of the cell structure 1. This material is dried and/or fired to thereby form the outer wall 5. As to the above-described cordierite powder contained as the main component in the coating material for use at this time, the tap bulk density is 1.3 g/cm³ or more.

The outer periphery of the cell structure is coated with a slurry (or paste) coating material containing: the cordierite powder constituting the main component, in which a tap bulk density of the cordierite powder is not less than the above-described value; and water. Then, the coating material is brought into contact with the porous body, and accordingly a coating layer is first formed. Immediately after the coating layer is formed, a part of moisture contained in the coating layer is absorbed by the cell structure which is the porous body. Accordingly, a thin dense layer is formed in the very vicinity of the surface of the porous body in contact with the coating layer, the thin dense layer being formed of a fine component (fine particle) and a coarse component (coarse particle) in the cordierite powder contained in the coating layer. Since the formed dense layer suppresses further absorption of the moisture by the cell structure, rapid moisture movement is suppressed in the coating layer formed by the coating material, and a moisture content difference is not easily generated in each portion in the coating layer formed by the applied coating material. As a result, effects are produced that a difference in shrinkage is not easily generated in each portion in the coating layer in a drying step, and defects such as generation of cracks in the formed outer wall and peeling of the outer wall are not easily generated.

Moreover, since the formed dense layer suppresses the absorption of the moisture by the cell structure, deterioration of a coating ability accompanying a rapid rise of viscosity of the coating material is inhibited. Therefore, according to the first production method of the present invention, the coating material can be applied while keeping a satisfactory coating ability. Therefore, the ceramic honeycomb structure which does not have any defect in its outer wall can be satisfactorily formed with a high yield.

As to the cordierite powder contained as the main component in the coating material, when the tap bulk density is less than 1.3 g/cm³, defects such as generation of cracks in the formed outer wall and peeling of the outer wall are unfavorably easily generated. From a viewpoint of inhibiting generation of defects such as generation of cracks in the outer wall and peeling of the outer wall, and producing the ceramic honeycomb structure satisfactorily with higher yield, the tap bulk density of the cordierite powder is preferably 1.34 g/cm³ or more, further preferably 1.39 g/cm³ or more. It is to be noted that in the first production method of the present invention, there is not any special limitation as to an upper limit value of the tap bulk density of the cordierite powder, but the value is preferably 1.50 g/cm³ or less in consideration of a substantial handling property or the like. In the first production method of the present invention, it is essentially preferable to use the coating material comprising: the cordierite powder as a main component having the predetermined tap bulk density; and water, from viewpoints of effect, ease of preparation, cost and the like.

Moreover, in the first production method, as to the cordierite powder contained in the coating material, it is preferable that an average particle diameter be in a range of 20 to 55 µm, and a content (44 µm or less powder component content A) of a powder component having a particle diameter of 44 µm or less in the cordierite powder be 80 mass% or less with respect to the whole cordierite powder. It is further preferable that the average particle diameter be in a range of 25 to 55 µm, and the 44 µm or less powder component content A be 80 mass% or less. It is especially preferable that the average particle diameter be in a range of 30 to 50 µm, and the 44 µm or less powder component content A be 78 mass% or less. By the use of the coating material containing the cordierite powder as a main component while defining the average particle diameter and the 44 µm or less powder component content A of the cordierite powder simultaneously with the tap bulk density, effects are produced that the absorption of the moisture into the cell structure is further effectively inhibited, the difference in shrinkage is not easily made in each portion in the coating layer in the subsequent drying step, and the defects such as generation of cracks in the outer wall and peeling of the outer wall are not easily generated. Especially, when the average particle diameter of the cordierite powder is in a range of 25 to 55 µm, it is possible to form the outer wall in which defects such as cracks are not easily generated, for example, even in a case where the structure is rapidly dried under a heating situation at 80°C or more. This is also preferable because the ceramic honeycomb structure can be manufactured which is superior in the thermal shock resistance.

When the average particle diameter of the cordierite powder is less than 20 µm, viscosity of the coating material increases to deteriorate a coating ability, and a moisture amount unfavorably needs to be increased in order to lower the viscosity of the coating material. When the diameter exceeds 55 µm, the coating material is not brought into a slurry or paste state, fluidity and wettability deteriorate, and the coating ability unfavorably sometimes deteriorates. When the 44 µm or less powder component content A exceeds 80 mass%, the defects such as generation of cracks in the outer wall and peeling of the outer wall are unfavorably easily generated. It is to be noted that there is not any special limitation as to a lower limit value of the 44 µm or less powder component content A, but the value is preferably 50 mass% or more considering that the dense layer of the cordierite powder is formed on the surface of the cell structure coated with the coating material.

Next, the second method for producing a ceramic honeycomb structure (hereinafter referred to simply as "the second production method" in some cases) will be described according to the present invention. In the second method for producing a ceramic honeycomb structure of the present invention, a coating material containing ceramic powder as a main component, and water is applied in such a manner as to coat an outer periphery of a cell structure constituted of a porous body having a plurality of cells, each cell being surrounded by partition walls and functioning as a fluid channel. The applied coating material is dried and/or fired to thereby form an outer wall. In the method for producing the ceramic honeycomb structure, an average particle diameter of the ceramic powder is in a range of 20 to 55 µm. Moreover, a ratio (44 µm or less powder component content B) of a powder component contained in the ceramic powder and having a particle diameter of 44 µm or less in the ceramic powder is 80 mass% or less with respect to the whole ceramic powder. Details will be described hereinafter.

A cell structure for use in the second production method, or the whole constitution of the manufactured ceramic honeycomb structure is similar to that used in the above-described embodiment of the first production method (see FIGS. 1, 2). In the second production method, as shown in FIG. 2, a coating material containing the ceramic powder as a main component, and water is applied in such a manner as to coat the outer periphery of the cell structure 1. This material is dried and/or fired to thereby form the outer wall 5. As to the above-described ceramic powder contained as the main component in the coating material for use at this time, an average particle diameter is in a range of 20 to 55 µm, and the 44 µm or less powder component content B is 88 mass% or less.

The outer periphery of the cell structure is coated with a slurry (or paste) coating material containing: the ceramic powder constituting the main component in which an average particle diameter of the ceramic powder is in a range of the above-described value and a 44 µm or less powder component content B of the ceramic powder is not more than the above-described value; and water. Then, the coating material is brought into contact with the porous body, and accordingly a coating layer is first formed. Immediately after the coating layer is formed, a part of moisture contained in the coating layer is absorbed by the cell structure which is the porous body. Accordingly, a thin dense layer is formed in the very vicinity of the surface of the porous body in contact with the coating layer, the thin dense layer being formed of a fine component (fine particle) and a coarse component (coarse particle) in the ceramic powder contained in the coating layer. Since the formed dense layer suppresses further absorption of the moisture by the cell structure, rapid moisture movement is suppressed in the coating layer formed by the coating material, and a moisture content difference is not easily generated in each portion in the coating layer formed by the applied coating material. As a result, effects are produced that a difference in shrinkage is not easily generated in each portion in the coating layer in a drying step, and defects such as generation of cracks in the outer wall and peeling of the outer wall are not easily generated.

Moreover, since the formed dense layer suppresses the absorption of the moisture by the cell structure, deterioration of a coating ability accompanying a rapid rise of viscosity of the coating material is inhibited. Therefore, according to the second production method of the present invention, the coating material can be applied while keeping a satisfactory coating ability. Therefore, the ceramic honeycomb structure which does not have any defect in its outer wall can be satisfactorily manufactured with a high yield.

As to the ceramic powder contained as the main component in the coating material, when the average particle diameter of the powder is less than 20 µm, viscosity of the coating material increases to deteriorate a coating ability, and a moisture amount unfavorably needs to be increased in order to lower the viscosity of the coating material. When the diameter exceeds 50 µm, the coating material might not go into a slurry or paste state, fluidity and wettability might deteriorate, and the coating ability unfavorably sometimes deteriorates. When the 44 µm or less powder component content B exceeds 80 mass%, the defects such as generation of cracks in the outer wall and peeling of the outer wall are unfavorably easily generated. It is to be noted that, in the second production method of the present invention, there is not any special limitation as to a lower limit value of the 44 µm or less powder component content B, but the value is preferably 50 mass% or more considering that the dense layer of the ceramic powder is formed on the surface of the cell structure coated with the coating material. In the second production method of the present invention, the coating material is preferably used essentially preferably comprising: the ceramic powder as a main component having the predetermined average particle diameter and a predetermined 44 µm or less powder component content B; and water from viewpoints of effect, ease of preparation, cost and the like.

From a viewpoint of inhibiting generation of defects such as generation of cracks in the outer wall or generation of peeling of the outer wall more effectively, and producing the ceramic honeycomb structure with a satisfactory yield, preferably the average particle diameter of the ceramic powder is in a range of 25 to 55 µm, and the 44 µm or less powder component content B is 80 mass% or less. Further preferably, the average particle diameter is in a range of 30 to 50 µm, and the 44 µm or less powder component content B is 78 mass% or less. Especially, when the average particle diameter of the ceramic powder is in a range of 25 to 55 µm, it is possible to form the outer wall in which defects such as cracks are not easily generated, for example, even in a case where the structure is rapidly dried under a heating situation at 80°C or more. This is also preferable because it is possible to manufacture the ceramic honeycomb structure which is also superior in thermal shock resistance.

As the ceramic powder contained in the coating material for use in the second production method of the present invention, examples include powder of cordierite, silicon carbide, silicon nitride, alumina, mullite, zirconia, zirconium phosphate, aluminum titanate, and titania, or powder of combination of two or more of them. When the powder is appropriately selected in accordance with the material of the cell structure coated with the coating material, affinity of the coating material can be enhanced.

Moreover, in the method for producing the ceramic honeycomb structure of the present invention, the coating material preferably further contains at least one selected from the group consisting of ceramic fiber, silica sol, and alumina sol. When the material contains ceramic fiber , the outer wall of the ceramic honeycomb structure can be highly strengthened. Even when the applied coating material is dried at a high temperature, generation of cracks or the like can be preferably more effectively inhibited. When the material contains colloidal oxide such as silica sol and alumina sol, the colloidal oxide can combine with the ceramic powder (or the cordierite powder) by drying/dehydrating to form a strong outer wall with superior in heat resistance or the like. Especially, silica sol or alumina sol irreversibly combines with the powder when dried at 150°C or more, the outer wall can be superior in chemical durability. It is to be noted that preferable examples of the ceramic fiber include fiber formed of alumino silicate, silicon carbide or the like.

There is not any special limitation as to a sectional shape of a cell in the cell structure for use in the method for producing the ceramic honeycomb structure of the present invention, and from a viewpoint in production, in addition to a quadrangular shape shown, for example, in FIG. 2, any shape of triangular, hexagonal and corrugated shapes is preferably adopted. Furthermore, there is not any special limitation as to a sectional shape of the cell structure for use. For example, in addition to a circular shape shown in FIG. 2, it is preferable to adopt an elliptical shape, a race track shape, an oval shape, a polygonal shape such as a triangular or substantially triangular shape, quadrangular or substantially quadrangular shape, or an irregular shape.

Next, a method for producing a cell structure usable in the present invention will be described in accordance with an example of the method for producing the cell structure 1 shown in FIG. 1. It is to be noted that, in the method for producing the ceramic honeycomb structure of the present invention, there is not any special limitation as to the usable method for producing the cell structure, but the following production method may be adopted.

Clay adjusted into an appropriate hardness may be extruded using a die capable of extruding the clay in such a manner as to obtain a desired cell shape, partition wall thickness, and cell density, followed by drying and firing to thereby obtain a sintered body formed of a ceramic and having a honeycomb structure. Next, an outer peripheral portion of the sintered body may be removed by an appropriate grinding process. Then, the cell structure 1 may be manufactured as shown in FIG. 1.

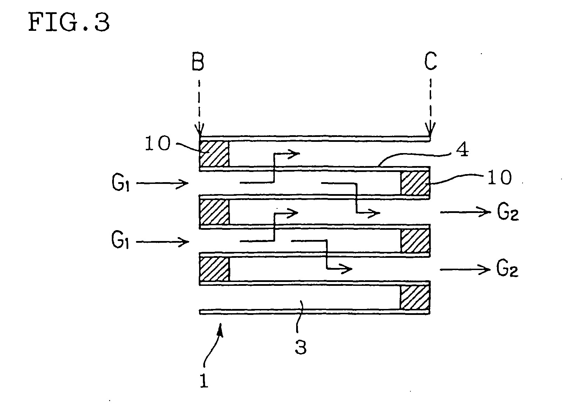

It is to be noted that, for example, as shown in FIG. 3, the cell structure 1 may be structured in such a manner that an inlet-side end face B and an outlet-side end face C of a plurality of cells 3 are alternately plugged by plugging portions 10. When a gas G₁ to be treated is introduced into the cells 3 from the inlet-side end face B of the cell structure 1 structured in this manner, dust and particulates are trapped by partition walls 4. On the other hand, a treated gas G₂ passes through the porous partition walls 4, flows into the adjacent cells 3, and is discharged from the outlet-side end face C. Therefore, it is possible to obtain the treated gas G₂ which has been separated from the dust and particulates in the gas G₁ to be treated. That is, by the use of the cell structure 1 structured as shown in FIG. 3. the ceramic honeycomb structure having a function of a filter can be manufactured.

To manufacture the cell structure having the above-described plugging portions, a plugging material may be introduced into a predetermined cell opening, for example, in a stage after the extruding or the drying. As the plugging material, the same material as that constituting the cell structure is preferably used in consideration of a difference of thermal expansion coefficient or the like. After introducing the plugging material, the material is dried and fired to constitute a sintered body. Next, the outer peripheral portion of the sintered body is ground and removed by an appropriate grinding process. Then, the cell structure 1 may be manufactured as shown in FIG. 3.

### Examples

The present invention will be hereinafter described specifically based on examples, but the present invention is not limited to these examples.

### (Production of cell structure)

Talc, kaolin, alumina, silica and the like were mixed in such a manner that a composition after fired was a theoretical composition (2MgO•2Al₂O₃•5SiO₂) of cordierite to obtain cordierite raw material powder. A forming auxiliary agent, pore former, and water were added to this cordierite raw material powder, and mixed and kneaded to obtain clay. The clay was extruded and dried, and accordingly a dried body having a honeycomb structure was manufactured. For this dried body, a plugging material was introduced into openings of a plurality of cells 3, and again dried to thereby form a plugged dried body having a structure in which inlet-side end face B and outlet-side end face C of the plurality of cells 3 were alternately plugged by plugging portions 10 (see FIG. 3). After firing the plugged dried body to form a sintered body, an outer peripheral portion was removed by grinding to adjust an outer diameter, and a cell structure 1 having an outer diameter of 265 mm was manufactured. It is to be noted that the cell structure 1 has a length (distance between B and C) of 178 mm, a partition wall thickness of 0.43 mm, and a cell pitch of 2.5 mm.

### (Examples 1 to 9, Comparative Examples 1 and 2 (preparation of coating material))

Coating materials (Examples 1 to 9, Comparative Examples 1 and 2) were prepared using as a main component cordierite powder having different tap bulk density, average particle diameter, and 44 µm or less powder component content (A and B). Components contained in the coating material, and blend ratios (mass%) of the respective components are shown in Table 1. Table 2 shows the tap bulk density (g/cm³), average particle diameter (µm), and 44 µm or less powder component content (A and B) (mass%) of the cordierite powder. It is to be noted that methods of measuring various physical properties of the used cordierite powder will be described hereinafter.

[Tap bulk density]: measured in accordance with a constant volume measuring method of JIS R1628-1997 "Method of measuring bulk density of fine ceramic powder".

[Average particle diameter, and content (44 µm or less powder component content (A and B)) of powder component having particle diameter of 44 µm or less with respect to whole ceramic (cordierite) powder]: measured in accordance with JIS R1629-1997 "Method of measuring particle diameter distribution by laser diffraction-scattering process of fine ceramic material". It is to be noted that LA-910 (manufactured by HORIBA, Ltd.) was used as a measurement device.

**(Table 1)**

| Component | Blend ratio (mass%) |
|---|---|
| Cordierite powder | 60.0 |
| Silica sol (colloidal silica) | 18.0 |
| Ceramic fiber | 3.0 |
| Dispersing agent | 0.6 |
| Organic binder | 0.2 |
| Antiseptic agent | 0.2 |
| Water | 18.0 |

**(Table 2)**

| Coating material | Tap bulk density (g/cm³) | Average particle diameter (µm) | 44 µm or less powder component content (A, B) (mass%) |
|---|---|---|---|
| Comparative Example 1 | 1.27 | 22.3 | 84 |
| Example 1 | 1.34 | 22.1 | 80 |
| Example 2 | 1.39 | 22.9 | 77 |
| Example 3 | 1.44 | 21.0 | 78 |
| Example 4 | 1.45 | 26.3 | 67 |
| Example 5 | 1.45 | 24.7 | 73 |
| Example 6 | 1.43 | 25.5 | 70 |
| Example 7 | 1.44 | 31.2 | 63 |
| Example 8 | 1.40 | 42.9 | 54 |
| Example 9 | 1.42 | 54.5 | 47 |
| Comparative Example 2 | 1.39 | 65.0 | 42 |

### (Examples 10 to 18, Comparative Examples 3, 4 (production of ceramic honeycomb structure))

After applying coating materials (Examples 1 to 9, Comparative Examples 1, 2) in such a manner as to coat an outer periphery of the above-described cell structure using a predetermined outer periphery coating unit, the materials were dried under room-temperature conditions for about 20 hours. Accordingly, the applied coating materials were hardened to form outer walls, and ceramic honeycomb structures (Examples 10 to 18, Comparative Examples 3, 4 (n = 3)) were manufactured each having an outer diameter of 266.6 mm × length of 178 mm, and an outer wall thickness of 0.8 mm.

### (Measurement of the number of generated peeled portions)

As to the ceramic honeycomb structures of Examples 10 to 18, Comparative Examples 3, 4 (n = 3 (Nos. 1 to 3)), the number (the number of generated peeled portions (places)) of visually confirmable peeled portions was measured which were generated in applying the coating material using the outer periphery coating unit. Results are shown in Table 3.

### (Measurement of surface roughness)

As to the ceramic honeycomb structures of Examples 10 to 18, Comparative Examples 3, 4 (n = 5), a surface roughness Ra (µm) was measured in accordance with JIS B0601 "surface roughness-definition and designation". Results are shown in Table 3.

### (Measurement of the number of cracks)

As to cracks generated in outer walls of manufactured ceramic honeycomb structures of Examples 10 to 18, Comparative Examples 3, 4, the number of visually confirmable cracks was measured. Results are shown in Table 3 (column of "Initial"). Each ceramic honeycomb structure was subjected to a predetermined thermal shock resistance test at a temperature of 500 to 650°C, and the number of cracks generated in the outer wall was measured after the test. Results are shown in Table 3. It is to be noted that a method of performing the thermal shock resistance test will be described hereinafter.

[Thermal shock resistance test]: measured in accordance with a thermal shock resistance test process of JASO M505-87 "test method of ceramic monolith carrier for automobile exhaust gas purifying catalyst".

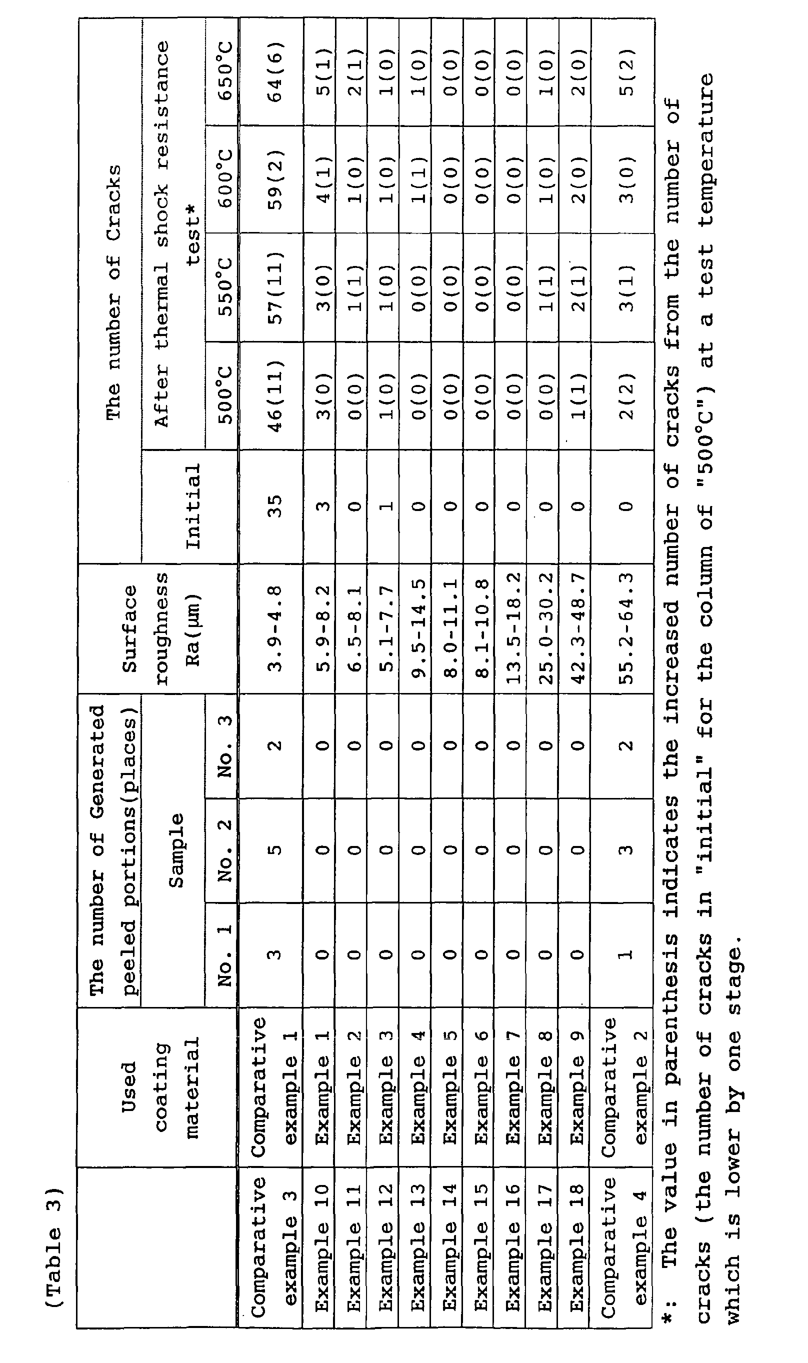

### (Examples 19 to 27, Comparative Examples 5, 6 (Production of ceramic honeycomb structure))

Ceramic honeycomb structures (Examples 19 to 27, Comparative Examples 5, 6) were manufactured having an outer diameter of 266.6 mm × length of 178 mm and an outer wall thickness of 0.8 mm in the same manner as in Examples 10 to 18, Comparative Examples 3, 4 except that a cell structure was dried by hot air at 80°C for about one hour, to which a coating material had been applied in such a manner as to coat an outer periphery of the structure. A surface roughness of the outer wall of each ceramic honeycomb structure was measured in accordance with the above-described "measurement of surface roughness". Results are shown in Table 4. It is to be noted that the number of visually confirmable cracks was measured, which were generated in the outer wall of each ceramic honeycomb structure, in accordance with the above-described "measurement of number of cracks". Results are shown in Table 4 (column of "initial"). As to each ceramic honeycomb structure, the above-described thermal shock resistance test was carried out at a temperature of 500 to 650°C, and the number of cracks generated in the outer wall was measured after the test. Results are shown in Table 4.

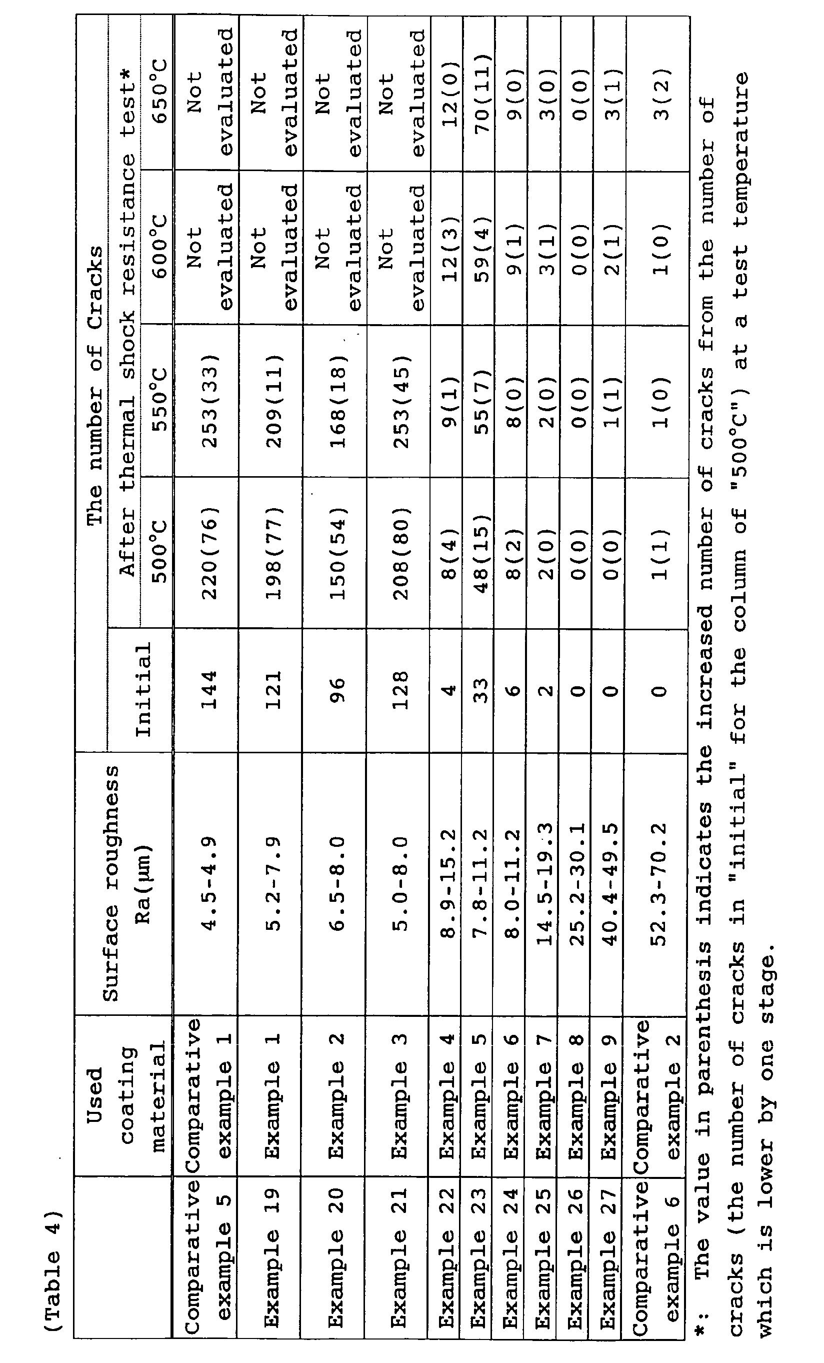

As apparent from the results shown in Table 3, the number of peeled portions was one to five places, generated in applying the coating materials of Comparative Examples 1, 2, whereas any peeled portion was not generated in applying the coating materials of Examples 1 to 9. As to the coating material of Comparative Example 1, it has been supposed that moisture was rapidly taken away by the ceramic structure, viscosity rapidly rose, the material was not easily elongated, a coating ability dropped, and the material was therefore easily peeled. As to the coating material of Comparative Example 2, it has been supposed that the coating material was not go into a slurry or paste state, fluidity and wettability deteriorated, the coating ability deteriorated, and the material was easily peeled. It has been found that, in the ceramic honeycomb structures of Examples 10 to 18 using the coating materials of Examples 1 to 9, the number (before the thermal shock resistance test) of cracks generated in the outer wall was remarkably small as compared with the number (before the thermal shock resistance test) of cracks generated in the outer wall of the ceramic honeycomb structure of Comparative Example 3. Furthermore, in the ceramic honeycomb structures of Examples 10 to 18, any remarkable increase of the number of cracks was not recognized even after the thermal shock resistance test. It has been supposed that since there was not any crack (or there were excessively less cracks) in an initial stage (before the thermal shock resistance test), any new crack was not developed from the crack which was a starting point, and an outer wall was formed which was superior in thermal shock resistance.

Moreover, as shown in Table 4, as to the ceramic honeycomb structures of Examples 22, and 24 to 27 which were manufactured using the coating materials of Examples 4, and 6 to 9 containing the cordierite powder having an average particle diameter of 25 to 55 µm, it has been found that the number of cracks is small, and the structures are also remarkably superior in thermal shock resistance, even when the outer walls were rapidly dried under the heating situation and accordingly formed

### Industrial Applicability

As described above, a coating material of the present invention produces an effect that defects such as generation of cracks and peeling are not easily generated, for example, in the surface of a porous body formed of a ceramic, and a coated wall (outer wall) can be formed with a satisfactory manufacturing yield.

Moreover, a ceramic honeycomb structure of the present invention produces an effect that defects such as generation of cracks in an outer wall and peeling of the outer wall are not easily generated, and is suitable, for example, as a catalyst carrier for carrying a catalyst which purifies an automobile exhaust gas or the like, or a filter for trapping particulates in an exhaust gas.

Furthermore, a method for producing a ceramic honeycomb structure of the present invention produces an effect that it is possible to manufacture with a satisfactory yield a ceramic honeycomb structure in which defects such as generation of cracks in an outer wall and peeling of the outer wall are not easily generated.

## Claims

1. A coating material comprising: cordierite powder as a main component having a tap bulk density of 1.3 g/cm³ or more; and water.

2. The coating material according to claim 1, wherein an average particle diameter of the cordierite powder is in a range of 20 to 55 µm, and a content of a powder component having a particle diameter of 44 µm or less in the cordierite powder is 80 mass% or less with respect to the whole cordierite powder.

3. The coating material according to claim 2, wherein the average particle diameter of the cordierite powder is in a range of 25 to 55 µm.

4. A coating material comprising:
ceramic powder as a main component; and
water,
wherein an average particle diameter of the ceramic powder is in a range of 20 to 55 µm, and a content of a powder component having a particle diameter of 44 µm or less in the ceramic powder is 80 mass% or less with respect to the whole ceramic powder.

5. The coating material according to claim 4, wherein the average particle diameter of the ceramic powder is in a range of 25 to 55 µm.

6. The coating material according to any one of claims 1 to 5, further comprising: at least one selected from the group consisting of ceramic fiber, silica sol, and alumina sol.

7. The coating material according to any one of claims 1 to 6, for use in coating a surface of a porous body formed of a ceramic and having a predetermined shape and thereafter drying and/or firing the material to thereby form an outer wall on the surface of the porous body.

8. A ceramic honeycomb structure comprising:
a cell structure constituted of a porous body having a plurality of cells, each cell being surrounded by partition walls and functioning as a fluid channel; and
an outer wall disposed in such a manner as to coat an outer peripheral portion of the cell structure and constituted of a porous body formed of a material containing ceramic powder as a main component,
wherein a surface roughness Ra of the outer wall is in a range of 5 to 50 µm.

9. The ceramic honeycomb structure according to claim 8, wherein the ceramic powder forming the outer wall is cordierite powder having a tap bulk density of 1.3 g/cm³ or more.

10. The ceramic honeycomb structure according to claim 8 or 9, wherein an average particle diameter of the ceramic powder forming the outer wall is in a range of 20 to 55 µm, and a content of a powder component having a particle diameter of 44 µm or less in the ceramic powder is 80 mass% or less with respect to the whole ceramic powder.

11. A method for producing a ceramic honeycomb structure, comprising the steps of:
applying a coating material containing cordierite powder as a main component and water in such a manner as to coat an outer periphery of a cell structure constituted of a porous body having a plurality of cells, each cell being surrounded by partition walls and functioning as a fluid channel; and
drying and/or firing the applied coating material to thereby form an outer wall,
wherein a tap bulk density of the cordierite powder is 1.3 g/cm³ or more.

12. The method for producing the ceramic honeycomb structure according to claim 11, wherein an average particle diameter of the cordierite powder is in a range of 20 to 55 µm, and a content of a powder component having a particle diameter of 44 µm or less in the cordierite powder is 80 mass% or less with respect to the whole cordierite powder.

13. The method for producing the ceramic honeycomb structure according to claim 12, wherein the average particle diameter of the cordierite powder is in a range of 25 to 55 µm.

14. A method for producing a ceramic honeycomb structure, comprising the steps of:
applying a coating material containing ceramic powder as a main component and water in such a manner as to coat an outer periphery of a cell structure constituted of a porous body having a plurality of cells, each cell being surrounded by partition walls and functioning as a fluid channel; and
drying and/or firing the applied coating material to thereby form an outer wall,
wherein an average particle diameter of the ceramic powder is in a range of 20 to 55 µm, and a content of a powder component having a particle diameter of 44 µm or less in the ceramic powder is 80 mass% or less with respect to the whole ceramic powder.

15. The method for producing the ceramic honeycomb structure according to claim 14, wherein the average particle diameter of the cordierite powder is in a range of 25 to 55 µm.

16. The method for producing the ceramic honeycomb structure according to any one of claims 11 to 15, wherein the coating material further comprises: at least one selected from the group consisting of ceramic fiber, silica sol, and alumina sol.
